# EUROPÄISCHE PATENTANMELDUNG

(11) **EP 0 812 729 A2**
(43) Veröffentlichungstag der Anmeldung: **17.12.1997**
(21) Anmeldenummer: 97102170.4
(22) Anmeldetag: 12.02.1997
(51) Int. Cl.: B60R 9/04

(54) **Dachlastenträger für Fahrzeuge**

(30) Priorität: 12.06.1996 DE 19623398
(71) Anmelder: Happich Fahrzeug-Dachsysteme GmbH, D-42285 Wuppertal (DE)
(72) Erfinder: Lumpe, Karl-Heinz, 45549 Sprockhövel (DE); Rothstein, Reinhold, Dr., 42279 Wuppertal (DE)

(57) **Zusammenfassung**

Beschrieben wird ein Dachlastenträger für Fahrzeuge, insbesondere Dachreling, bestehend aus zwei sich in Fahrzeuglängsrichtung nahe der seitlichen Dachränder erstreckenden Holmen (1), die von sich auf dem Fahrzeugdach (2) abstützenden Füßen (3, 4) getragen werden und zur lösbaren Anordnung von Querträger vorgesehen sind. Bei diesem Dachlastenträger ist erfindungsgemäß vorgesehen, daß die Holme (1) und/oder Querträger jeweils mit einer auf Überlastung ansprechenden Meßeinrichtung ausgestattet sind.

## Beschreibung

Die Erfindung bezieht sich auf einen Dachlastenträger für Fahrzeuge, insbesondere Dachreling, bestehend aus zwei sich in Fahrzeuglängsrichtung nahe der seitlichen Dachränder erstreckenden Holmen, die von sich auf dem Fahrzeugdach abstützenden Füßen getragen werden und zur lösbaren Anordnung von Querträgern vorgesehen sind.

Dachlastenträger sind in verschiedenen Ausführungsformen bekannt und erfreuen sich zunehmender Beliebtheit, weil sich auf diesen auch recht sperrige Güter relativ problemlos transportieren lassen. In den letzten Jahren sind insbesondere Dachrelings in Mode gekommen, die in der Regel ständig auf dem Fahrzeugdach verbleiben und zum guten Aussehen der Fahrzeuge beitragen. An die Holme der Relings werden im Bedarfsfall Querträger montiert, die dann die Dachlast unmittelbar aufnehmen.

Es ist leider oftmals zu beobachten, daß solche Dachlastenträger über Gebühr strapaziert und mehr oder weniger überladen werden, worunter die Verkehrssicherheit leidet. Ein Überladen ist häufig darauf zurückzuführen, daß die Fahrzeuglenker gar nicht merken, daß sie den Dachlastenträger überladen, weil sie das Ladegewicht nicht abzuschätzen vermögen.

Der vorliegenden Erfindung liegt daher die Aufgabe zugrunde, denjenigen Fahrzeuglenkern, die ihren Dachlastenträger nicht mutwillig überladen, ein Hilfsmittel anhand zu geben, mit dem sich eine unwissentliche, dennoch fahrlässige Überladung vermeiden läßt.

Gemäß der Erfindung wird diese Aufgabe dadurch gelöst, daß die Stützen und/oder Holme und/oder Querträger jeweils mit einer auf Überlastung ansprechenden Meßeinrichtung ausgestattet sind. Auf diese Weise läßt sich eine unwissende Überladung des Dachlastenträgers vermeiden.

Gemäß der Erfindung kann eine Meßeinrichtung zum Einsatz kommen, die eine ablesbare Einrichtung, wie eine Skala, aufweist.

Eine bevorzugte Weiterbildung der Erfindung kann darin bestehen, daß die Meßeinrichtung mit einem optischen und/oder akustischen Signalgeber verbunden ist. Der Signalgeber kann über ein elektrisches Kabel mit der Meßeinrichtung verbunden und im Fahrzeuginnenraum z. B. am Armaturenbrett angeordnet sein. Damit ergibt sich der besondere Vorteil, daß sowohl statische Lasten beim Beladen des Dachlastenträgers als insbesondere auch dynamische Belastungen im Fahrbetrieb erfaßt und bei Überschreitung kritischer Grenzwerte dem Fahrzeuglenker durch Warnsignale zur Kenntnis gegeben werden.

Mit Vorteil kann eine Meßeinrichtung vorgesehen werden, die eine elastische Verformung des jeweiligen Holms oder Querträgers oder der Stützen erfaßt und anzeigt. Dabei können die Messungen über Dehnungsmeßstreifen oder auch über Wegmeßsysteme erfolgen. Im letzteren Fall ist an optische oder auf Ultraschall-Basis arbeitende Systeme gedacht.

Ausführungsbeispiele der Erfindung werden nachfolgend anhand der Zeichnungen näher erläutert, und es zeigen:
- Fig. 1: eine unbelastete Dachreling mit einer ersten Meßeinrichtung,
- Fig. 2: die Dachreling nach Fig. 1 im belasteten Zustand,
- Fig. 3: eine unbelastete Dachreling mit einer zweiten Meßeinrichtung,
- Fig. 4: die Dachreling nach Fig. 3 im belasteten Zustand,
- Fig. 5: eine unbelastete Dachreling mit einer dritten Meßeinrichtung und
- Fig. 6: die Dachreling nach Fig. 5 im belasteten Zustand.

Die Dachreling besteht bei allen Ausführungsbeispielen aus einem Holm 1, der an den Endbereichen von sich auf dem Fahrzeugdach 2 abstützenden Füßen 3 getragen wird. Bei längeren Holmen 1 empfiehlt sich die Anordnung eines Mittelfußes 4. Normalerweise erstrecken sich zwei Holme 1 etwa parallel zueinander auf dem Fahrzeugdach 2 und tragen die Holme 1 miteinander verbindende, hier nicht gezeigte Querträger zur Aufnahme der jeweiligen Dachlast F.

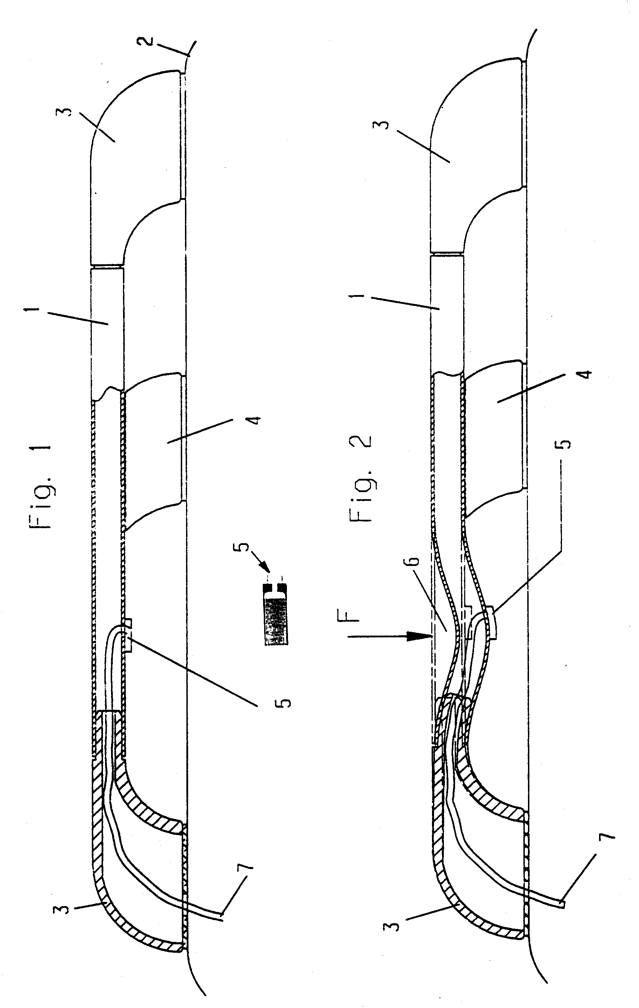

In Fig. 1 ist ein am Holm 1 angeordneter Dehnungsmeßstreifen 5 gezeigt. Über den Dehnungsmeßstreifen 5 erfolgt die Messung der elastischen Verformung 6 des Holms 1 und/oder der nichtgezeigten Querträger. Der Dehnungsmeßstreifen 5, der also zur Erfassung der lastabhängigen Dehnungen 6 dient, kann direkt auf dem Dachlastenträger, wie in Fig. 1 und 2 gezeigt, appliziert werden. Mit Hilfe entsprechender Analysen sind für jeden Holm 1 und/oder Querträger die systemspezifischen Grenzlasten zu bestimmten. Auch die Lage der Meßeinrichtung ist produktspezifisch festzulegen.

Ein am Dehnungsmeßstreifen 5 angeschlossenes Kabel ist an die Fahrzeugelektrik geleitet und zu einem Signalgeber (nicht gezeigt) geführt.

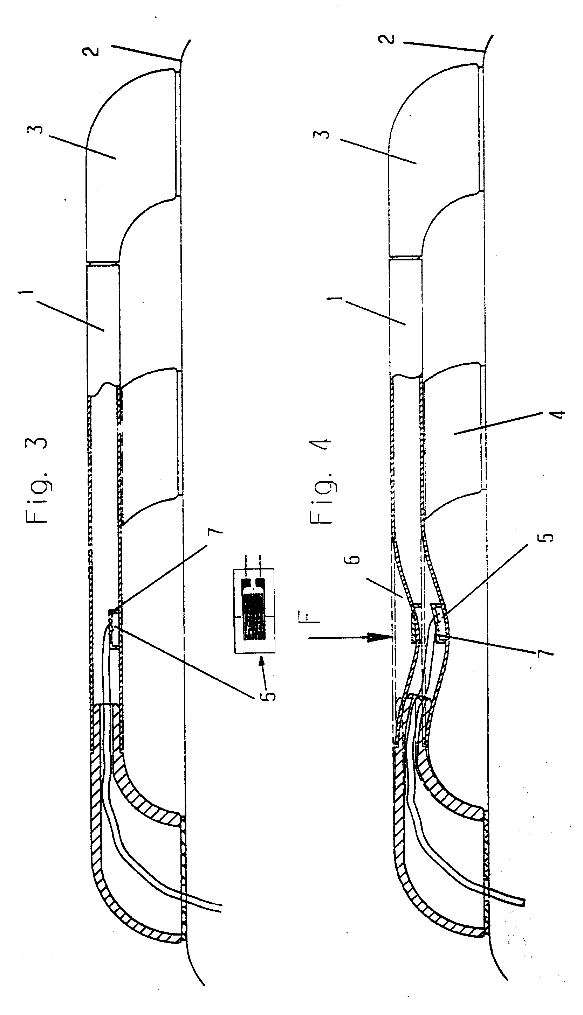

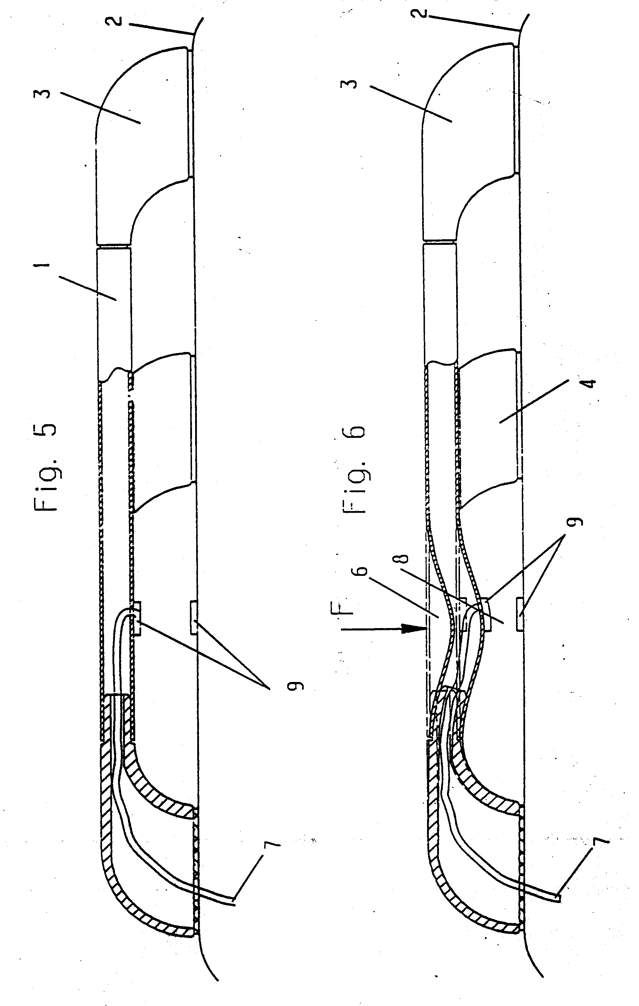

Beim Ausführungsbeispiel gemäß Fig. 3 und 4 ist der anhand Fig. 1 und 2 beschriebene Grundaufbau gegeben. Der Unterschied besteht hier lediglich darin, daß der Dehnungsmeßstreifen 5 in einem am Holm 1 sitzenden Prüfkörper 7 angeordnet ist.

Beim Ausführungsbeispiel gemäß Fig. 5 und 6 ist wiederum eine Dachreling, bestehend aus einem von Füßen 3, 4 getragenen Holm 1 gezeigt. Die hier vorgesehene Meßeinrichtung 9 beruht auf einem Wegmeßsystem-Prinzip, bei dem der Abstand 8 zwischen dem Holm 1 und/oder Querträger und einer festen Basis, wie das Fahrzeugdach 2 gemessen wird. Die Messungen können über optische Mittel oder durch Einsatz von Ultraschallsystemen erfolgen.

Wesentlich ist, daß ein Dachlastenträger für Fahrzeuge mit einem Meßsystem ausgestattet ist, das über die Erfassung elastischer Verformungen 6 kritische Belastungen anzeigt und daß dieses System in der Lage ist, sowohl statische Lasten beim Beladen des Dachlastenträgers als auch die dynamischen Belastungen im Fahrbetrieb zu erfassen und bei Überschreitung kritischer Grenzwerte ein Warnsignal an den Fahrzeuglenker abzugeben.

Meßeinrichtungen in Form von Dehnungsmeßstreifen sind ebenso wie Wegmeßsysteme auf dem allgemeinen Gebiet der Meßtechnik bekannt und bedürfen daher hier nicht der näheren Erläuterung.

Die beschriebene Erfindung kann mit Vorteil auch bei sogenannten "Dachgepäckträgern" aber auch bei sogenannten "Heckgepäckträgern" zum Einsatz gelangen und damit auch dort einen Beitrag zur Unfallverhütung leisten.

## Patentansprüche

1. Dachlastenträger für Fahrzeuge, insbesondere Dachreling, bestehend aus zwei sich in Fahrzeuglängsrichtung nahe der seitlichen Dachränder erstreckenden Holmen (1), die von sich auf dem Fahrzeugdach (2) abstützenden Füßen (3, 4) getragen werden und zur lösbaren Anordnung von Querträgern vorgesehen sind, dadurch gekennzeichnet, daß die Holme (1) und/oder Querträger jeweils mit einer auf Überlastung ansprechenden Meßeinrichtung ausgestattet sind.

2. Dachlastenträger nach Anspruch 1, dadurch gekennzeichnet, daß die Meßeinrichtung eine ablesbare Einrichtung wie Skala aufweist.

3. Dachlastenträger nach Anspruch 1 oder 2, dadurch gekennzeichnet, daß die Meßeinrichtung mit einem optischen und/oder akustischen Signalgeber verbunden ist.

4. Dachlastenträger nach wenigstens einem der Ansprüche 1 bis 3, dadurch gekennzeichnet, daß eine Meßeinrichtung vorgesehen ist, die eine elastische Verformung des jeweiligen Holms (1) oder Querträgers erfaßt und anzeigt.

5. Dachlastenträger nach wenigstens einem der Ansprüche 1 bis 4, dadurch gekennzeichnet, daß die Messungen über Dehnungsmeßstreifen (5) erfolgen.

6. Dachlastenträger nach wenigstens einem der Ansprüche 1 bis 4, dadurch gekennzeichnet, daß die Messungen über Wegmeßsysteme (9) erfolgen.
